(19) Europäisches Patentamt
European Patent Office
Office européen des brevets

(11) EP 3 794 053 B1

(12) EUROPEAN PATENT SPECIFICATION

(45) Date of publication and mention of the grant of the patent:
**13.03.2024 Bulletin 2024/11**

(21) Application number: **19723830.6**

(22) Date of filing: **17.05.2019**

(51) International Patent Classification (IPC):
***C08G 59/68*** *(2006.01)* ***C08G 59/40*** *(2006.01)*

(52) Cooperative Patent Classification (CPC):
**C08G 59/686; C08G 59/4021; C08G 59/4035**

(86) International application number:
**PCT/EP2019/062889**

(87) International publication number:
**WO 2019/219953 (21.11.2019 Gazette 2019/47)**

# (54) IMPROVED CURATIVE COMPOSITION

VERBESSERTE HÄRTENDE ZUSAMMENSETZUNG

COMPOSITION CURATIVE AMÉLIORÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.05.2018 EP 18172983**

(43) Date of publication of application:
**24.03.2021 Bulletin 2021/12**

(73) Proprietors:
- **Hexcel Composites Limited**
  **Duxford, Cambridgeshire CB22 4QB (GB)**
- **Hexcel Holding GmbH**
  **4061 Pasching (AT)**

(72) Inventors:
- **VERGE, Nicholas**
  **Duxford Cambs CB22 4QB (GB)**
- **GANGLBERGER, Thorsten**
  **4060 Pasching (AT)**

(74) Representative: **TLIP Limited**
**Murgitroyd House**
**165-169 Scotland Street**
**Glasgow G5 8PL (GB)**

(56) References cited:
**WO-A1-2016/001245**
**JP-A- H11 293 092**
**US-A- 4 507 445**
**US-A- 4 714 648**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

**Description**

The present invention relates to curative formulations and in particular to curative formulations that are useful in the curing of thermosetting resin formulations particularly formulations containing epoxy phenolic novolac resins.

**BACKGROUND**

Composite materials are produced in many forms. A fibrous layer impregnated with a curable resin matrix formulation is known herein as a prepreg. Moulding compounds generally comprise a fibrous material in a chopped, isotropic or quasi-isotropic form in combination with a resin matrix formulation. The resin matrix formulations in these materials may be a epoxy novolac resin which may be uncured or partially cured.

Resin matrix formulations can be selected from a wide range of polymerisable components and additives. Common polymerisable components comprise epoxies, polyesters, vinylester, polyisocyanates, and phenolics. Formulations containing these components are generally referred to as epoxy, polyester, vinylester, polyisocyanate and phenolic formulations respectively. The present invention is concerned with thermosetting resins comprising formulations in which the resin content comprises at least 50 wt % epoxy phenolic resin particularly epoxy novolac resins.

Phenolic resins are typically made by the reaction of phenol and formaldehyde. Depending on the catalyst (acidic vs. alkaline) and the molar ratio of formaldehyde to phenol, phenol novolac or phenol resol resins can be formed from the reaction. These resins can be further reacted with epichlorohydrin to form epoxy phenolic resins in the form of epoxy phenol novolac resin (also commonly referred to as an "epoxy novolac resin") and epoxy phenol resol resins (commonly referred to as "epoxy resols") respectively.

Although this invention is applicable to resin systems containing at least 50 wt % of either type of resin it is particularly applicable to resin systems containing at least 50 wt % of epoxy novolac resins.

The properties required of a composite material are that when cured it has the required glass transition temperature (Tg), and also has the required mechanical properties according to the use to which it is to be put. In certain applications it is important that the Tg is retained under damp or humid conditions. It is desirable to use thermosetting materials for structural components as they have superior mechanical performance and creep resistance compared to thermoplastics. For these applications, the thermosetting matrix must have an initial cured Tg that is high enough to allow demoulding at the cure temperature. A higher cured Tg capability enables curing at higher cure temperature; higher cure temperature will enable faster cure cycles as reactivity increases with temperature.

Thermosetting resin formulations comprising at least 50 wt % epoxy phenolic resins include catalysts and/or curatives, and these are selected according to the nature of the resin, the product to be produced and the cure cycle of the resin that is required. The curing of composite materials to support high volume manufacturing rates requires short cure cycles. A cure cycle of 2.5 minutes can provide for a rate manufacture of ca. 166000 parts per mould per year (assuming a 30 second unload-re loading time and 95% utilisation).

Imidazole based curatives are widely used for curing resins. Unfortunately, these curatives are very reactive so mixed solutions of resin and these curatives have the problem that they show an early on-set of curing and cannot be used as a single-component epoxy resin composition which is manufactured and then delivered at the point of use because these compositions would thicken, gel and cure in transit or in storage.

US4,714,648 discloses a prepreg obtained by impregnating fibers with an epoxy resin composition by a hot melt method, wherein the epoxy resin composition comprises components (A), (B), and (C), wherein (A) is an epoxy resin (B) is a hardening agent composition containing a hydrazide type hardening agent for an epoxy resin, and having a melting point of not higher than 160°C, and (B) further contains at least one compound selected from the group consisting of alcohols and phenols having a melting point of not less than 50°C and (C) is a specific urea compound.

Adipic acid dihydrazide and isophthalic acid dihydrazide are known as curatives for epoxy resin formulations. It has been suggested that they may be used together with accelerators such as urea based materials as is disclosed in US Patents 4404356 and 4507445. However there remains a need for curatives for epoxy phenolic resins which provide resin compositions which are fast curing (in under 3 minutes, preferably in under 2 minutes or faster to reach at least 95% by weight of the cured composition) and which result in a composition which has a high glass transition temperature (Tg) of at least 120 °C, preferably at least 130 °C and also retains the Tg over a period of time particularly when subjected to moisture particularly at elevated temperatures.

The present invention aims to solve the above described problems and/or to provide improvements generally.

According to the invention there is provided a use, a curable resin composition, a composite and a process according to any one of the accompanying claims.

We have found that if adipic acid dihydrazide and/or isophthalic dihydrazide are used together with hydroxyl urones as a curative for thermosetting resin compositions containing at least 50 weight% (wt%) of epoxy phenolic resin, a formulation which has fast cure properties, a high glass transition temperature (Tg) combined with good Tg retention can be achieved.

Orthohydroxyfenuron has been proposed as a resin curative for epoxy resins and has been proposed for use in combination with dihydrazide curatives dicyandiamide. However, the use in combination with the hydrazides to cure epoxy phenolic resins has been found to enable unexpectedly faster cure and higher glass transition temperatures to be obtained with epoxy phenolic resins.

Examples of other hydroxy substituted urones for use in the present invention include a compound comprising a substituted or unsubstituted urea base compound of the formula

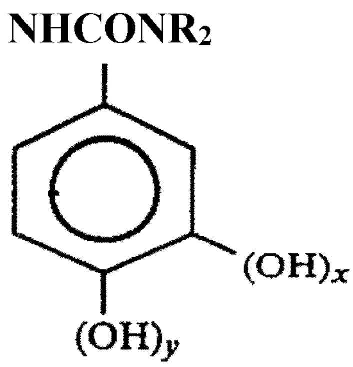

where R is a C1 to C5 alkyl group and x and *y* each denote zero or 1 and the sum of x and *y* is 1.

The present invention provides the use of a mixture of carboxylic acid hydrazide and a hydroxy substituted urone for curing a resin formulation containing at least 50 wt % of an epoxy phenolic resin, wherein the carboxylic acid hydrazide is adipic acid dihydrazide.

The invention further provides a curable resin composition comprising a resin that is at least 50% by weight epoxy phenolic resin containing a mixture of a carboxylic acid hydrazide and a hydroxy substituted urone, wherein the carboxylic acid hydrazide is adipic acid dihydrazide.

In a further embodiment the invention provides the use of such a curable resin composition as a matrix in fibre reinforced composites which may be a prepreg or may be obtained by resin infusion of dry fibrous material laid up in a mould. The invention further provides a fibre reinforced composite that has been produced from the curable resin composition.

The present invention further provides a process for the production of cured fibre reinforced composites having a Tg (as determined in accordance with ASTM D7028 following curing for 2 minutes at 170°C) of 140 to 150°C, preferably of from 145 to 150°C, comprising moulding a material comprising a fibrous material enclosed in a matrix of a resin composition comprising at least 50 wt % epoxy phenolic resin and containing a carboxylic acid hydrazide and a hydroxy substituted urone at a temperature from 140°C to 180°C for no more than 5 minutes, preferably no more than 3 minutes or 2 minutes; wherein the carboxylic acid hydrazide is adipic acid dihydrazide.

The dihydrazide and the hydroxyl urone may be used in any particular proportions and proportions in the range of 0.50 to 2.00, preferably from 0.90 to 1.20 and even more preferably from 1.00 to 1.15 and most preferably from 1.08 to 1.12 based on the respective weight of the dihydrazide and the hydroxyl urone.

The use of the combination of curatives in epoxy phenolic resin systems according to this invention has produced a material which delivers an E' Tg of in the range of from 140-150°C when subjected to a 5 minute cure at 150°C and particularly from 145 to 150 °C when subjected to a 3 minute or 2 minute cure at 150 °C (to at least 95% cure as defined in this application). Whereas an equivalent resin cured with a mixture of orthohydroxyfenuron and dicyanamide delivers a Tg of 135°C.

The use of the mixture of curatives of the invention together with a bisphenol A epoxy resin in place of the epoxy novolac system according to the invention will again drop the Tg, in some cases to as low as 115-120°C. Furthermore, the combination of fast cure and high E'Tg is better with hydroxyl substituted urones than with hydroxyl free urones.

The composition of the invention provides at least 95% of cure in under 2 minutes at 170°C with a cured Tg of over 130°C and a retained Tg of over 100°C whilst providing a cured resin that has desired mechanical properties for use in structural applications.

The cured Tg is measured in accordance with ASTM D7028 (Standard Test Method for Glass Transition Temperature (DMA Tg) of Polymer Matrix Composites by Dynamic Mechanical Analysis (DMA)) following curing of the composition for 2 minutes at 170 °C and the retained or wet Tg is measured following isothermal curing at 170°C for 2 minutes of the neat resin formulation (composition) and exposing the cured formulation to water at 70°C for 14 days, and then measuring the Tg of the sample using the same measurement standard ASTM D7028.

The loss modulus E" is measured in accordance with ASTM E1640 using dynamic mechanical analysis (DMA)

at a ramp rate of 5°C/min. The hot wet loss modulus E"w is measured using the same standard at a ramp rate of 5°C/min following immersion of the cured composition to water at a temperature of 70 °C for 14 days.

The storage modulus E' is measured in accordance with ASTM E1640 using dynamic mechanical analysis (DMA) at a ramp rate of 5°C/min. The hot wet loss modulus E'w is measured using the same standard at a ramp rate of 5°C/min following immersion of the cured composition to water at a temperature of 70 °C for 14 days. Corresponding Tg values may be are derived from the storage and loss moduli for both dry samples and hot wet treated samples as outlined in ASTM E1640 and as clarified herein.

In dynamic mechanical analysis (DMA) a resin composition sample being probed is subjected to a time-varying deformation and the sample response is measured. In the DMA experiment, a sinusoidal time-varying strain (controlled deformation) is applied to the sample:

$$\gamma = \gamma_0 \sin(\omega t) \qquad \text{(I)}$$

Where $\gamma$ is the applied strain, $\gamma_0$ is the strain amplitude, t is time and $\omega$ is the frequency.

The DMA instrument measures the resultant stress:

$$\sigma = \sigma_0 \sin(\omega t + \delta) \qquad \text{(II)}$$

Where $\sigma$ is the resultant stress, $\sigma_0$ is the stress amplitude and $\delta$ is the phase angle.

For most resin compositions due to the viscoelastic nature (both viscous component and an elastic component) there is a phase lag due to the contribution of the viscous component called the phase angle. The phase angle is important since it is used to calculate the dynamic moduli.

For small strain amplitudes and time independent polymers (linear viscoelastic regime) the resulting stress can be written in terms of the (dynamic) storage modulus (E') and the (dynamic) loss modulus (E"):

$$\sigma = \gamma_0 [E' \sin(\omega t) + E'' \cos(\omega t)] \qquad \text{(III)}$$

The storage modulus (E') and the loss modulus (E") can thus be calculated using the following equations derived from (III):

$$E' = \sigma_0 / \gamma_0 \cos\delta \quad \text{and} \quad E'' = \sigma_0 / \gamma_0 \sin\delta \qquad \text{(IV)}$$

So that the phase angle is defined as

$$\tan\delta = E'' / E' \qquad \text{(V)}$$

A standard test for assigning the glass transition temperature Tg by DMA is found in ASTM E1640 and is derived from the storage modulus, the loss modulus and from tan $\delta$. From the respective moduli and tan $\delta$ diagrams derived by DMA, different glass transition temperatures associated with the storage modulus (E' Tg), the loss modulus (E" Tg) and tan $\delta$ (tan $\delta$ Tg ) can be readily identified.

As defined and illustrated in ASTM standard E1640, the Tg can be labeled for a DMA resin composition sample using the following parameters:

E' Tg: Occurs at the lowest temperature and is identified by the intersecting tangents corresponding to a tangent to the storage modulus curve below the transition temperature and a tangent to the storage modulus curve at the inflection point approximately midway through the sinoidal change associated with the transitions.

E" Tg: Occurs at the middle temperature and is identified as the maximum in the E" curve.

Tan $\delta$ Tg: Occurs at the highest temperature and is identified as the maximum of the tan $\delta$ curve.

Using Digital Scanning Calorimetry the heat released during the curing reaction is related to the total heat for fully curing. This can be measured as follows.

A reference resin sample is heated from 10°C to 250°C at 10°C/min rate to full cure (100%) and the generated heat ΔHi is recorded. The degree of cure of a particular resin sample of the same composition as the reference resin sample can then be measured by curing the sample to the desired temperature and at the desired rate and for the desired time by heating the sample at these conditions and measuring the heat ΔHe generated by this cure reaction. The degree of cure (Cure %) is then defined by (VI):

$$\text{Cure }\% = [(\Delta Hi - \Delta He)/\Delta Hi] \times 100\ [\%] \qquad \text{(VI)}$$

where ΔHi is the heat generated by the uncured resin heated from 10°C up to fully cured at 250°C and ΔHe the heat generated by the certain degree cured resin heated up to a desired temperature and rate.

The epoxy phenolic resin component of this invention may comprise known condensation products of phenol and phenol derivatives with formaldehyde. Suitable phenol derivatives are substituted phenols, in particular alkyl-substituted phenols such as cresols, xylenols and other alkylphenols such as p-tert-butylphenol, octylphenol and nonylphenol, and also arylphenols, such as phenylphenol, naphthols and 2-hydric phenols such as resorcinol and bisphenol A and condensation products of mixtures of the above-mentioned phenols and phenol derivatives with formaldehyde. To optimize particular properties the epoxy phenolic resins mentioned may be modified with unsaturated natural or synthetic compounds, for example tung oil, rosin or styrene. The epoxy phenolic resins may also be a hydrocarbon epoxy novolac resin such as the dicyclopentadiene novolac resin available from Huntsman as Tactix 556®.

The curable resin material used in this invention comprises at least 50 % by weight of epoxy phenolic resin. The resin material may be 100% epoxy phenolic resin or it may be a blend of the epoxy phenolic resin with other curable resins such as an epoxy resin or a polyester resin. Where the resin material contains an epoxy resin it may be any of the epoxy resins widely used in composite materials. Epoxy resins can be solid, liquid or semi-solid and are characterised by their functionality and epoxy equivalent weight. The functionality of an epoxy resin is the number of reactive epoxy sites per molecule that are available to react and cure to form the cured structure. The resin material may comprise at least one difunctional epoxy resin. Preferably, the composition comprises one or more difunctional epoxy resin components in the range of from 20 to 45% by weight, preferably from 25 to 32% and more preferably from 28 to 41% by weight based on the total weight of resin.

We have discovered that the combination of adipic acid dihydrazide, a hydroxyl substituted urone and a resin system containing at least 50 wt % epoxy phenolic resin results in a fast curing composition which has a cured Tg of over 130°C when cured at temperatures over 170°C and a retained Tg (or wet Tg) of over 100°C whilst the cured loss modulus E" is at values over 130°C and the hot wet loss modulus E"w is at values over 120°C.

In a preferred embodiment no imidazole curing agent is present in the composition.

In another embodiment of the invention there is provided the use of a curable resin composition as hereinbefore described in combination with a fibrous reinforcement material. The fibrous reinforcement material may be provided: as a woven fabric or a multi-axial fabric to form a prepreg, as individual fiber tows for impregnation with the resin composition to form towpregs, or as chopped fibers, short fibers or filaments to form a moulding compound. The preferred fibrous material is selected from carbon fibre, glass fibre, aramid and mixtures thereof.

There is also disclosed an adhesive comprising a resin composition as described in combination with at least one filler.

The curable resin composition of this invention is capable of fast curing whilst the Tg, retained Tg and mechanical properties enable use of the cured resin composition in Industrial structural applications particularly automotive and aerospace structural applications as well as sporting goods and wind turbine components.

The curable resin compositions of this invention may include other typical additives used in thermosetting resins such as impact modifiers, fillers, antioxidants and the like; however, the amount of epoxy phenolic resin present in the composition according to this invention is the amount based on the total resin content of the composition excluding the amount of other additives.

*Impact modifiers*

The curable resin composition may comprise an impact modifier. Impact modifiers are widely used to improve the impact strength of cured resin compositions with the aim to compensate their inherent brittleness and crack propagation. Impact modifier may comprise rubber particles such as CTBN rubbers (carboxyl-terminated butadiene-acrylonitrile) or core shell particles which contain a rubber or other elastomeric compound encased in a polymer shell. The advantage of core shell particles over rubber particles is that they have a controlled particle size of the rubber core for effective toughening and the grafted polymer shell ensures adhesion and compatibility with the epoxy resin composition. Examples of such core shell rubbers are disclosed in EP0985692 and in WO 2014062531.

Alternative impact modifiers may include methylacrylate based polymers, polyamides, acrylics, polyacrylates,

acrylate copolymers, phenoxy based polymers, and polyethersulphones.

*Fillers*

In addition the curable resin composition may comprise one or more fillers to enhance the flow properties of the composition. Suitable fillers may comprise talc, microballoons, flock, glass beads, silica, fumed silica, carbon black, fibers, filaments and recycled derivatives, and titanium dioxide.

The present invention is illustrated by reference to the following Examples in which the following materials are used.

Adipic Acid Dihydrazide (ADH/ ADH-J) AC Catalysts
Ortho-hydroxyfenuron (OHFU)- Urone Curative
YDPN 638 (Epoxy Phenol Novolac)- Kukdo
SCT150 Trisphenylmethane epoxy novolac - ShinA T&C
Epikote 828-diglycidyl ether bisphenol A average EEW 187
MY721-triglycidyl ether based epoxy, average EEW113
GT6071- diglycidyl ether bisphenol A- epoxy average EEW457
DICY- Dicyandiamide
U52 blend of 2,4, toluene bis dimethyl urea and 2,6 toluene bis dimethyl ureas
MX153 Core Shell rubber dispersed in bisphenol A - Kaneka
TODI $3,3^{1}$ Dimethyl-$4$-$4^{1}$ biphenyl one bis (dimethyl urea)
DIPPI 3-(2,6 Disopropylphenyl) 1,1 dimethyl urea
PDI $N,N^{11}$ - 1,4, Phenylene bis (N, N1 dimethyl urea)
NDI $N,N^{11}$ - 1,5 - Naphthalene diylbis (N,N' dimethyl urea)
UR500- 3,3'-(4-methyl-1,3-phenylene)bis (1,1-dimethylurea)
XD1000- DCPD (Dicyclopentadiene) Novolac resin, EEW=245-260
DLS 1840- semi-solid bisphenol A
Phenoxy- Thermoplastic tougher
Aerosil R202- hydrophilic silica filler
Pat 656/B3R- release agent (Wurtz)

The following measurements were conducted:

Speed of cure (s) ASTM D2471 - Time to peak and time to 95% cure using dielectric analysis (DEA);
Tg (°C) Glass transition temperature of cured resin matrix composition, measured from DMA in accordance with standard ASTM D7028
Wet Tg (°C) immersion of cured resin composition in water at 70 °C for 2 week, Tg measured from DMA according to ASTM D7028
E' Tg (°C) Tg for dry and hot wet treated samples, determined in accordance with ASTM E1640 at a ramp rate of 5 °C/min and derived from storage modulus E'

E" Tg (°C) for dry and hot wet treated samples, determined in accordance with ASTM E1640 at a ramp rate of 5 °C/min and derived from loss modulus E"

$$E''\text{ retention (\%)} = E''\text{ Wet Tg} / E''\text{ Tg} * 100$$

$$E'\text{ retention (\%)} = E'\text{ Wet Tg} / E'\text{ Tg} * 100$$

<u>Examples 1 to 5</u>

The following formulations were prepared.

Table 3. Formulations of Comparative Examples 1 to 4 and Example 1

| Component | Comparative Example 1 | Comparative Example 2 | Comparative Example 3 | Comparative Example 4 | Example 1 |
|---|---|---|---|---|---|
| SCT150 | 9.70 | | 35.40 | | |
| XD1000 | 9.70 | | | | |
| YDPN638 | 16.50 | 27.60 | | | 88.20 |
| GT6071 | 15.50 | | 16.40 | 44.10 | |
| Epikote 828 | 13.58 | 9.00 | 16.40 | 44.10 | |
| DLS1840 | | 46.00 | | | |
| Phenoxy | | 3.90 | | | |
| MX153 | 19.40 | | 19.00 | | |
| Aerosil R202 | 1.50 | | | | |
| PAT656/83R | 1.50 | | 1.00 | | |
| ADH-J | 6.80 | | 6.80 | 6.80 | 6.80 |
| OHFU | | | 5.00 | 5.00 | 5.00 |
| U52 | 5.82 | | | | |
| UR500 | | 4.50 | | | |
| DICY | | 9.00 | | | |

The formulations of Comparative Examples 1 to 4 and Example 1 were exposed to a temperature of 150°C and the time to reach 95% cure and the E'Tg were measured and found to be as follows.

Table 4. Results for Comparative Examples 1 to 4 and Example 1.

| Measurement | Comparative Example 1 | Comparative Example 2 | Comparative Example 3 | Comparative Example 4 | Example 1 |
|---|---|---|---|---|---|
| Time to 95% cure (minutes) | 4.6 | | 3.5 | 5.0 | 4.8 |
| E'Tg (°C) | 135 | 125 | 142 | 118 | 146 |

The following Comparative Examples show the effect of the curatives combination on time to reach 95% cure and E'Tg.

Comparative Examples 3 and 6 to 10

The following formulations were prepared.

Table 5. Formulations of Comparative Examples 3 and 6 to 10

| Component | Comp Example 3 | Comp Example 6 | Comp Example 7 | Comp Example 8 | Comp Example 9 | Comp Example 10 |
|---|---|---|---|---|---|---|
| SCT150 | 35.40 | 35.40 | 35.40 | 35.40 | 35.40 | 35.40 |
| XD1000 | | | | | | |
| YDPN638 | | | | | | |
| GT6071 | 16.40 | 16.40 | 16.40 | 16.40 | 16.40 | 16.40 |
| Epikote 828 | 16.40 | 16.40 | 16.40 | 16.40 | 16.40 | 16.40 |
| DLS1840 | | | | | | |

(continued)

| Component | Comp Example 3 | Comp Example 6 | Comp Example 7 | Comp Example 8 | Comp Example 9 | Comp Example 10 |
|---|---|---|---|---|---|---|
| Phenoxy | | | | | | |
| MX153 | 19.00 | 19.00 | 19.00 | 19.00 | 19.00 | 19.00 |
| Aerosil R202 | | | | | | |
| PAT656/83R | 1.00 | 1.00 | 1.00 | 1.00 | 1.00 | 1.00 |
| ADH-J | 6.80 | 6.80 | 6.80 | 6.80 | 6.80 | 6.80 |
| OHFU | 5.00 | | | | | |
| DIPPI | | 5.00 | | | | |
| TODI | | | 5.00 | | | |
| PDI | | | | 5.00 | | |
| NDI | | | | | 5.00 | |
| U52 | | | | | | 5.00 |

The formulations of Comparative Examples 3 and 6 to 10 were exposed to a temperature of 150°C and the time to reach 95% cure and the E'Tg were measured and found to be as follows (Table 6).

Table 6. Results for Comparative Examples 3 and 6 to 10

| Measurement | Comp Example 3 | Comp Example 6 | Comp Example 7 | Comp Example 8 | Comp Example 9 | Comp Example 10 |
|---|---|---|---|---|---|---|
| Time to 95% cure (minutes) | 3.5 | 5 | 6.5 | 6.5 | 4.5 | 4.5 |
| E'Tg (°C) | 142 | 120 | 145 | 0 | 100 | 130 |

Comparative Examples 11 to 13

Finally, the following formulations of Comparative Examples 11 to 13 were prepared.

Table 7. Formulations of Comparative Examples 11 to 13

| Component | Comp Example 11 | Comp Example 12 | Comp Example 13 |
|---|---|---|---|
| SCT150 | 34.2 | 20 | 33.8 |
| XD1000 | | | |
| YDPN638 | | 27.60 | |
| GT6071 | 16.4 | 16 | 15.50 |
| Epikote 828 | 16.4 | 16 | 15.50 |
| MY721 | | 15 | |
| Phenoxy | | | |
| MX153 | 19 | | 19.00 |
| Aerosil R202 | | | |
| PAT656/83R | 1 | 1 | 1.00 |
| ADH-J | 6.80 | 6.8 | |
| OHFU | 6.2 | 6.2 | 6.2 |

(continued)

| Component | Comp Example 11 | Comp Example 12 | Comp Example 13 |
|---|---|---|---|
| U52 | | | |
| UR500 | | | |
| DICY | | | 9.0 |

The formulations of Comparative Examples 11, 12 and 13 were exposed to a temperature of 150°C and the time to reach 95% cure and the E'Tg were measured and found to be as follows.

Table 4. Results for Comparative Examples 15 to 17.

| Measurement | Comp Example 11 | Comp Example 12 | Comp Example 13 |
|---|---|---|---|
| Time to 95% cure (minutes) | 2.4 | 1.9 | 1.7 |
| E'Tg (°C) | 142 | 140 | 138 |

These examples show that for the curative combination of a carboxylic hydrazide and a hydroxy substituted urone, and in particular of ortho-droxy fenuron and a hydrazide, an advantageous combination of a reduced time to 95% cure and increased E'Tg is achieved.

## Claims

1. The use of a mixture of carboxylic acid hydrazide and a hydroxy substituted urone for curing a resin formulation containing at least 50 wt % of an epoxy phenolic resin, wherein the carboxylic acid hydrazide is adipic acid dihydrazide.

2. The use according to Claim 1 in which the hydroxy substituted urone is ortho-hydroxy fenuron.

3. A curable resin composition comprising a resin that is at least 50% by weight epoxy phenolic resin containing a mixture of a carboxylic acid hydrazide and a hydroxy substituted urone, wherein the carboxylic acid hydrazide is adipic acid dihydrazide.

4. A curable resin composition according to Claim 3 in which the hydroxy substituted urone is ortho-hydroxy fenuron.

5. The use of a curable resin composition according to Claim 3 or Claim 4 in the production of fibre reinforced composites.

6. The use according to Claim 5 in the production of fibre reinforced composites by the infusion processes.

7. A fibre reinforced composite that has been produced from a curable resin composition as claimed in claim 3.

8. A fibre reinforced composite according to Claim 7 in which the hydroxy substituted urone is ortho-hydroxy fenuron.

9. A process for the production of cured fibre reinforced composites having a Tg (as determined in accordance with ASTM D7028 following curing for 2 minutes at 170°C) of 140 to 150°C, preferably of from 145 to 150°C, comprising moulding a material comprising a fibrous material enclosed in a matrix of a resin composition comprising at least 50 wt % epoxy phenolic resin and containing a carboxylic acid hydrazide and a hydroxy substituted urone at a temperature from 140°C to 180°C for no more than 5 minutes, preferably no more than 3 minutes or 2 minutes; wherein the carboxylic acid hydrazide is adipic acid dihydrazide.

10. A process according to Claim 9 in which the hydroxy substituted urone is ortho-hydroxy fenuron.

## Patentansprüche

1. Verwendung einer Mischung aus Carbonsäurehydrazid und einem hydroxysubstituierten Uron zum Härten einer

Harzformulierung, die zu mindestens 50 Gew.-% ein Epoxyphenolharz enthält, wobei das Carbonsäurehydrazid Adipinsäuredihydrazid ist.

2. Verwendung gemäß Anspruch 1, wobei das hydroxysubstituierte Uron ortho-Hydroxyfenuron ist.

3. Eine härtbare Harzzusammensetzung, beinhaltend ein Harz, das zu mindestens 50 Gew.-% aus Epoxyphenolharz besteht, das eine Mischung aus einem Carbonsäurehydrazid und einem hydroxysubstituierten Uron enthält, wobei das Carbonsäurehydrazid Adipinsäuredihydrazid ist.

4. Härtbare Harzzusammensetzung gemäß Anspruch 3, wobei das hydroxysubstituierte Uron ortho-Hydroxyfenuron ist.

5. Verwendung einer härtbaren Harzzusammensetzung gemäß Anspruch 3 oder Anspruch 4 bei der Herstellung von faserverstärkten Verbundwerkstoffen.

6. Verwendung gemäß Anspruch 5 bei der Herstellung von faserverstärkten Verbundwerkstoffen mittels des Tränkungsverfahrens.

7. Ein faserverstärkter Verbundwerkstoff, der aus einer härtbaren Harzzusammensetzung gemäß Anspruch 3 hergestellt wurde.

8. Faserverstärkter Verbundwerkstoff gemäß Anspruch 7, wobei das hydroxysubstituierte Uron ortho-Hydroxyfenuron ist.

9. Ein Verfahren zur Herstellung von gehärteten faserverstärkten Verbundwerkstoffen mit einer Tg (bestimmt gemäß ASTM D7028 nach 2-minütigem Härten bei 170 °C) von 140 bis 150 °C, vorzugsweise von 145 bis 150 °C, beinhaltend das Formen eines Materials, das ein Fasermaterial beinhaltet, das in einer Matrix aus einer Harzzusammensetzung eingeschlossen ist, die zu mindestens 50 Gew.-% Epoxyphenolharz beinhaltet und ein Carbonsäurehydrazid und ein hydroxysubstituiertes Uron enthält, bei einer Temperatur von 140 °C bis 180 °C für nicht mehr als 5 Minuten, vorzugsweise nicht mehr als 3 Minuten oder 2 Minuten; wobei das Carbonsäurehydrazid Adipinsäuredihydrazid ist.

10. Verfahren gemäß Anspruch 9, wobei das hydroxysubstituierte Uron ortho-Hydroxyfenuron ist.

## Revendications

1. L’utilisation d’un mélange d’hydrazide d’acide carboxylique et d’une urone à substitution hydroxy pour durcir une formulation de résine contenant au moins 50 % en poids d’une résine époxy-phénolique, l’hydrazide d’acide carboxylique étant le dihydrazide d’acide adipique.

2. L’utilisation selon la revendication 1 dans laquelle l’urone à substitution hydroxy est l’ortho-hydroxy fénuron.

3. Une composition de résine durcissable comprenant une résine dont au moins 50 % en poids est une résine époxy-phénolique contenant un mélange d’un hydrazide d’acide carboxylique et d’une urone à substitution hydroxy, l’hydrazide d’acide carboxylique étant le dihydrazide d’acide adipique.

4. Une composition de résine durcissable selon la revendication 3 dans laquelle l’urone à substitution hydroxy est l’ortho-hydroxy fénuron.

5. L’utilisation d’une composition de résine durcissable selon la revendication 3 ou la revendication 4 dans la production de composites renforcés de fibres.

6. L’utilisation selon la revendication 5 dans la production de composites renforcés de fibres par les procédés d’infusion.

7. Un composite renforcé de fibres qui a été produit à partir d’une composition de résine durcissable telle que revendiquée dans la revendication 3.

8. Un composite renforcé de fibres selon la revendication 7 dans lequel l’urone à substitution hydroxy est l’ortho-hydroxy fénuron.

9. Un procédé pour la production de composites renforcés de fibres durcis ayant une température de transition vitreuse (Tg) (telle que déterminée conformément à l'ASTM D7028 après un durcissement pendant 2 minutes à 170 °C) allant de 140 à 150 °C, de préférence de 145 à 150 °C, comprenant le moulage d'un matériau comprenant une matière fibreuse enfermée dans une matrice d'une composition de résine comprenant au moins 50 % en poids de résine époxy-phénolique et contenant un hydrazide d'acide carboxylique et une urone à substitution hydroxy à une température allant de 140 °C à 180 °C pendant pas plus de 5 minutes, de préférence pas plus de 3 minutes ou 2 minutes ; l'hydrazide d'acide carboxylique étant le dihydrazide d'acide adipique.

10. Un procédé selon la revendication 9 dans lequel l'urone à substitution hydroxy est l'ortho-hydroxy fénuron.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4714648 A
- US 4404356 A
- US 4507445 A
- EP 0985692 A
- WO 2014062531 A